## Europäisches Patentamt

## European Patent Office

## Office européen des brevets

(19)

(11) Veröffentlichungsnummer: **0 089 384**
**B1**

(12) # EUROPÄISCHE PATENTSCHRIFT

(45) Veröffentlichungstag der Patentschrift:
**13.08.86**

(21) Anmeldenummer: **82102241.5**

(22) Anmeldetag: **19.03.82**

(51) Int. Cl.⁴: **F 16 K 11/07,** F 16 K 11/085,
E 03 B 7/07

(54) Einrichtung zur Versorgung von ortsveränderlichen Verbrauchern mit einem Druckfluid.

(43) Veröffentlichungstag der Anmeldung:
**28.09.83 Patentblatt 83/39**

(45) Bekanntmachung des Hinweises auf die Patenterteilung:
**13.08.86 Patentblatt 86/33**

(84) Benannte Vertragsstaaten:
**AT BE CH DE FR GB IT LI LU NL SE**

(56) Entgegenhaltungen:
**AT-B-312 385
DE-A-1 937 840
DE-A-2 933 056
DE-C-832 977
FR-A-1 589 484
FR-A-2 465 139
GB-A-1 501 091
US-A-1 785 289
US-A-3 195 562**

(73) Patentinhaber: **Bachofen AG, Ackerstrasse 42, CH-8610 Uster (CH)**

(72) Erfinder: **Luginbühl, R., Florastrasse 5, CH- 8700 Küsnacht (CH)**

(74) Vertreter: **Fiedler, Otto Karl, Dipl.- Ing., Hemminger Strasse 4, D-7015 Korntal-Münchingen 2 (DE)**

LIBER, STOCKHOLM 1986

## Beschreibung

Die Erfindung bezieht sich auf eine Einrichtung zur Versorgung von ortsveränderlichen Verbrauchern mit einem Druckfluid, mit einer Versorgungs-Zuführleitung, die eine Mehrzahl von mit gegenseitigem Abstand über die Leitungslänge verteilt angeordneten Zapfstellen aufweist, und mit mindestens einer längs der Zuführleitung beweglich gelagerten Anschlussvorrichtung für eine zugehörige Zapfleitung, wobei die Zapfstellen mindestens ein durch Ueberführung der Anschlussvorrichtung in eine Anschlußstellung aus einer Schließstellung in eine Oeffnungsstellung überführbares Zapfventil aufweisen und wobei im Bereich der Anschlussverbindung zwischen Zapfventil und Zapfleitungseingang mit dem Oeffnen des Zapfventils selbsttätig wirksam werdende Dichtungsmittel für die äussere Abdichtung der Anschlussverbindung vorgesehen sind. Derartige Einrichtungen werden beispielsweise in Form von mehr oder weniger ausgedehnten Druckluft- oder Druckwasser-Zapfsystemen zur wahlweise ortsveränderlichen Versorgung von beweglichen Werkzeugmaschinen oder Transporteinrichtungen verwendet.

Eine Einrichtung der vorgenannten Art ist beispielsweise bekannt aus der US-A-3 195 562. Dort sind an den einzelnen Zapfstellen Hubventile vorgesehen, die unter der Wirkung des Druckfluids in Schließstellung gehalten werden. Die auf eine Zapfstelle eingestellte Anschlussvorrichtung muss demgemäss mit einem Betätigungsglied, welches unter einer zur Ueberwindung der Ventil-Schliesskraft ausreichenden, vergleichsweise starken Oeffnungs-Anpresskraft steht, in seine Offenstellung überführt werden. Diese Oeffnungs-Anpresskraft wird dort durch Zusammendrücken einer Feder mittels einer geneigten Auflaufbahn beim Einfahren der Anschlussvorrichtung in die Zapf- oder Anschlußstellung aufgebaut und beim Einrasten in die Anschlußstellung unmittelbar auf das unter der Druckfluidwirkung in der Zuführleitung stehende Hubventilglied übertragen. Die zum Oeffnen erforderliche Betätigungskraft und damit der beim Einfahren der Anschlussvorrichtung in die Zapfstellung zu überwindende Widerstand sind somit zwangsläufig vergleichsweise gross, was die Handhabung erschwert.

Eine andere bekannte Zapfeinrichtung der vorgenannten Art ist bekannt aus der GB-A-1 501 091. Die Zapfventile sind dort ebenfalls als unter dem Druck des Fluids in der Zuführleitung in Schließstellung gehaltene Hubventile ausgebildet, die mittels komplizierter und aufwendiger Uebersetzungsgetriebe zur Verstärkung der Oeffnungs-Betätigungskraft sowie unter Zuhilfenahme eines motorischen Antriebsaggregats für die Einfahrbewegung der Anschlussvorrichtung an der Zapfstelle geöffnet werden.

Ferner ist aus der OE-A-1 937 840 eine Zapfventilkonstruktion bekannt, bei der druckentlastete, an ihren beiden Stirnflächen mit Druckfluid beaufschlagte Schub- bzw. Drehventilglieder vorgesehen sind. Diese Ventilglieder sind zwar ferner mit ihren Längsachsen parallel zur Längsrichtung einer Zuführleitung für das Druckfluid angeordnet. Diese Ventilglieder sind jedoch für eine selbsttätige Oeffnungs- und Schließbetätigung sowie für eine selbsttätige äußere Abdichtung der Anschlußstelle durch das Anfahren bzw. Abfahren der Anschlußvorrichtung bezüglich der jeweiligen Zapfstelle nicht geeignet. Dieser Stand der Technik zeigt auch keine Mittel, durch die eine einfache und zuverlässige Auslösung und Abwicklung dieser Funktionen selbsttätig erreicht werden könnte.

Aufgabe der Erfindung ist demgegenüber die Schaffung einer Zapfstellen- Fluidversorgungseinrichtung der eingangs genannten Art, die sich durch einfachen und robusten Aufbau sowie durch entsprechend verschleissarmen Betrieb mit langer, störungsfreier Lebensdauer und durch geringen Herstellungsaufwand bei leichter und einfacher Betätigungsweise, insbesondere auch im Handbetrieb für das Verfahren der Anschlussvorrichtung, auszeichnet. Die erfindungsgemässe Lösung dieser Aufgabe kennzeichnet sich bei einer Versorgungseinrichtung der eingangs erwähnten Art dadurch, dass die Zapfventile mit bezüglich des Druckfluids in der Zuführleitung wenigstens annähernd druckentlatentem Ventilglied versehen sind.

Das danach vorgesehene, druckentlastete Ventilglied kann durch vergleichsweise geringe Kräfte, beispielsweise eine schwache Federvorspannung, in Schließstellung gehalten oder grundsätzlich auch bezüglich der Druckfluidwirkung indifferent lagestabil gelagert und durch die jeweils von der Zapfstelle abfahrende Anschlussvorrichtung in Schliessstellung überführt werden. In jedem Fall sind für das Oeffnen des Zapfventils nur sehr geringe Kräfte erforderlich, die durch Verschieben der Anschlussvorrichtung von Hand in die Anschlußstellung leicht aufgebracht werden können. Vorzugsweise sorgen dann ohnehin erforderliche, selbsttätig wirkende Abdichtungsmittel für die Äussere Abdichtung der Anschlußstelle nach Oeffnen des Zapfventils auch für die Lagearretierung der Anschlussvorrichtung in der Anschluss- bzw. Zapfstellung.

Solche selbsttätig wirkenden Abdichtungs- und Arretiermittel für eine Zapf- Versorgungseinrichtung der gattungsgemässen Art sind bekannt aus der DE-A-2 933 056.

Das Lüften solcher selbsttätigen Abdichtungsmittel beim Abfahren der Anschlussvorrichtung kann bei Verwendung eines druckentlasteten Schieberventils der vorliegenden Art ebenfalls mittels einfacher Zusatz- Steuerkanäle mit geringer Betätigungs- bzw. Verschiebekraft, im allgemeinen überdies ohne komplizierte Servoventilanordnungen erreicht werden. Eine bevorzugte Ausführungsform der Erfindung kennzeichnet sich dadurch, dass die Zapfventile je ein zylindrisches oder prismatisches, an seinen beiden Stirnflächen mit dem Druckfluid beaufschlagtes Schubventilglied aufweisen. Die Verwendung eines solchen Schubventilgliedes das insbesondere parallel zur Längsrichtung der Zuführleitung zwischen Offen- und Schließstellung verschiebbar gelagert und infolgedessen mit einem entsprechenden Einsatz innerhalb der Zuführleitung selbst untergebracht werden kann, erlaubt in einfachster Weise und mit geringstem Herstellungsaufwand eine praktisch vollständige Druckentlastung mit entsprechend geringen Schliess-Vorspannkräften und Oeffnungs-Betätigungskräften. Ferner gestaltet sich die Abdichtung des Ventilgliedes einfach und zuverlässig, nämlich mit Hilfe von üblichen, den Umfang des Ventilkörpers geschlossen umgebenden Dichtungsringen (O-Ringe).

Eine andere, vorteilhafte Weiterbildung der Erfindung sieht für die Zapfventile zylindrische Drehventilglieder vor, die wiederum insbesondere mit ihrer Zylinderachse parallel zur Längsrichtung der Zuführleitung angeordnet werden können und mit einem entsprechenden Schwenk-Betätigungsglied der Anschlussvorrichtung in Wirkverbindung treten. Eine solche Ausführung bietet insbesondere den Vorteil vergleichsweise geringer Ventilbetätigungswege bei vorgegebenem Durchströmquerschnitt und den Vorteil noch geringerer äusserer Betätigungskräfte infolge der mit der drehbaren Lagerung des Ventilgliedes im allgemeinen ohnehin gegebenen Betätigungskraft-Hebelübersetzung.

Weitere Merkmale und Vorteile der Erfindung werden anhand der in den Zeichnungen schematisch dargestellten Ausführungsbeispiele erläutert. Hierin zeigt:

Fig. 1 einen Vertikal-Axialschnitt einer Zapfstelle mit in Anschlußstellung befindlicher Anschlussvorrichtung, gemäss Schnittebene I-I in Fig. 3,

Fig. 2 einen abgestuften Vertikal-Querschnitt der Zapfstelle mit Anschlussvorrichtung gemäss Schnittebene II-II in Fig. 1,

Fig. 3 einen Horizontalschnitt der Zapfventil-Betätigungsanordnung gemäss Schnittebene III-III in Fig. 2

Fig. 4 einen Vertikal-Querschnitt einer weiteren Ausführung einer Zapfstelle mit in Anschlußstellung befindlicher Anschlussvorrichtung,

Fig. 5 einen Vertikal-Querschnitt einer anderen Ausführung einer Zapfstelle, und

Fig. 6 eine entsprechende Abwicklungsdarstellung.

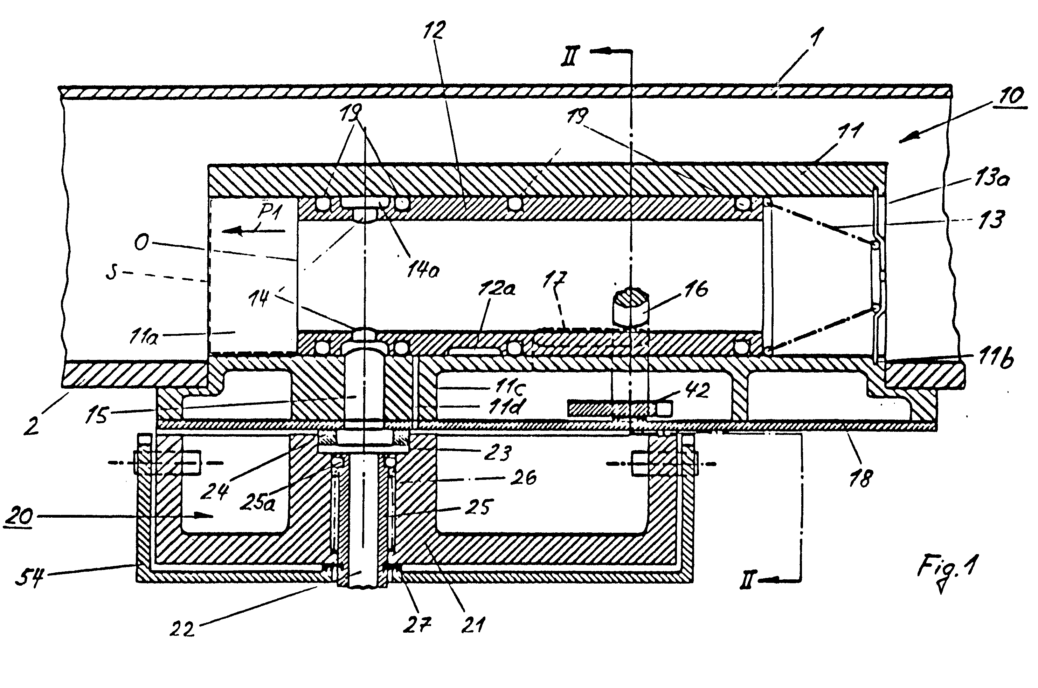

Die in den Fig. 1 bis 3 gezeigte Druckfluid-Versorungseinrichtung umfasst ein in die verstärkte Bodenplatte 2 einer Hohlprofil-Zuführleitung 1 eingesetztes und im wesentlichen im Innenraum der Zuführleitung untergebrachtes Zapfventil 10. Auf beiden Querschnittsseiten der Zuführleitung 1 angeformte, sich zueinander parallel erstreckende Führungsrippen 4 nehmen in ihrem vertikalen Zwischenraum Tragund Führungsrollen 6 auf, die in den oberen Abschnitten von sich vertikal erstreckenden Seiten-Tragplatten 8 gelagert sind. Zwischen den unteren Abschnitten dieser Tragplatten ist eine Anschlussvorrichtung 20 befestigt und somit während der Zu- und Abfahrbewegung im Bereich der Zapfstelle an ihrer Oberseite mit konstantem, geringem Spaltabstand 9 von der Unterseite des Zapfventils 10 parallel zur Längsrichtung der Zuführleitung 1 geführt.

Das Zapfventil 10 umfasst ein in den Innenraum der Zuführleitung 1 eingreifendes Gehäuse 11 mit einer sich parallel zur Zuführleitungs-Längsachse erstreckenden, zylindrischen Durchgangsbohrung 11a, in der ein zylindrischrohrförmiges Schubventilglied 12 zwischen der in vollen Linien angedeuteten Offenstellung O und der teilweise strichliert angedeuteten Schließstellung S verschiebbar gelagert ist. Eine Kegelwendel-Druckfeder 13 stützt sich einerseits an einem zweiteiligen, in eine innere Umfangsnut 11b eingesetzte Tragscheibe 13a und andererseits gegen die rechte Stirnfläche des Schubventilgliedes 12 ab, so dass letzterer unter Federvorspannung in Richtung gegen seine Schließstellung S steht. Diese Federvorspannung braucht nur die Reibung zwischen Schubventilglied 12 und Durchgangsbohrung 11a sowie Reibungskräfte innerhalb der Betätigungsgetriebe bei der Rückstellbewegung zu überwinden und entsprechende, ebenfalls geringe Massenbeschleunigungskräfte aufzubringen.

Innerhalb des rohrförmigen Schubventilgliedes 12 sind mehrere radiale Durchströmkanäle 14 sowie eine diese letzteren aufnehmende, sich über den äusseren Umfang des Schubventilgliedes erstreckende Sammelnut 14a eingeformt. Letztere tritt in der Offenstellung O mit einem Abströmkanal 15 im verstärkten Bodenabschnitt 11c des Gehäuses 11 in Deckung, der seinerseits in der Anschlußstellung der Anschlussvorrichtung 20 gemäss Fig. 1 mit einer in den Grundkörper 21 der Anschlussvorrichtung eingeformten Eingangsmündung 22 einer mit der Anschlussvorrichtung verbundenen, flexiblen Zapfleitung 25 in Durchgangsverbindung steht. Die Unterseite des Gehäuses 11 ist durch eine dünne platte 18, die vom Abströmkanal 15 durchbrochen ist, glattflächig abgedeckt.

Das rohrförmige Schubventilglied 12 ist an seinen beiden Stirnflächen mit dem im Innenraum der Zuführleitung 1 befindlichen Druckfluid beaufschlagt und somit in Bezug auf die entsprechenden Kräfte druckentlastet, also - abgesehen von der Vorspannung der Druckfeder 13 und geringfügiger Reibungskräfte infolge von den Zylinderumfang des Ventilkörpers umgebenden Dichtungsringen 19 - kräftefrei verschiebbar. Die Anschlussvorrichtung 20 umfasst ein sich in Längsrichtung der Zuführleitung 1 bzw. in Verschieberichtung der

iseitig
6 mit
eten
sglied
46 eines
getriebe
ie
g 20 in
Ventil-
fahren in
en 46
ler Ruhe-
1g O
26a
m

gelagert
hnitt am
jlied 12
t.
7 im

nd
s 12.

h den
26a, bis
ir
sstellung
6 in

Jng 22

einem
ing 24
pfventils
rd
ds

itung 28
bar und
ichtringes
let, die
eren
1 mit der
er

ier
n unter
ehenden
en
t in der

las somit
ne 58 mit

iel 54
1 an der
lulse 25

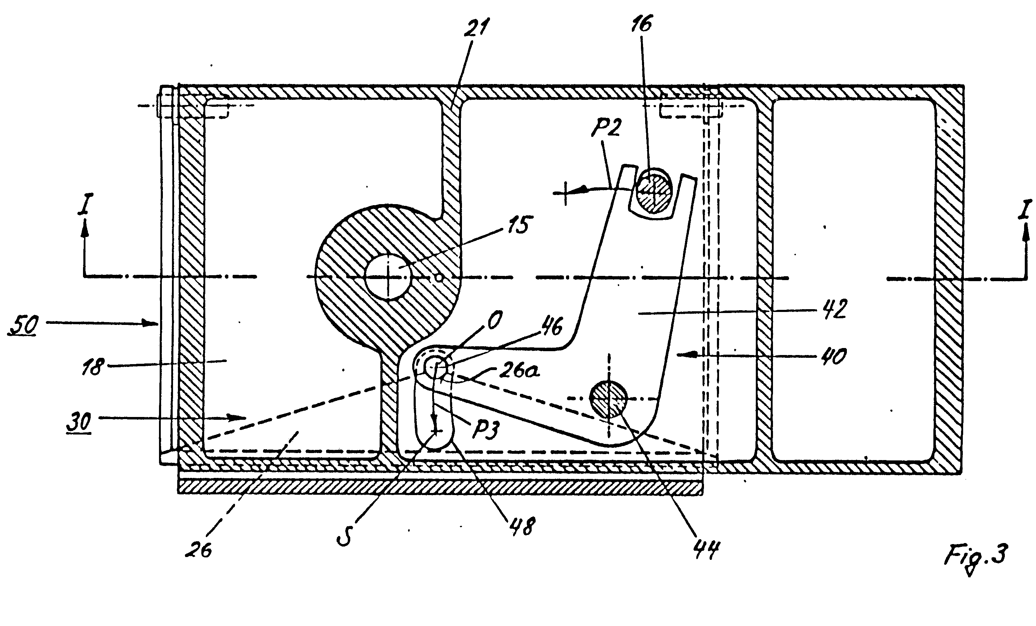

und damit den Anschlagring 27 auf den Auslösehebel 54 im Sinne einer Abwärtsschwenkung gemäss Pfeil P5 einwirken lässt. Damit wird das Betätigungsglied 26 gemäss Pfeil P4 abwärts bewegt und gibt den Steuerzapfen 46 für seine Rückstellbewegung gemäss Pfeil P3 (Fig. 3) frei. Damit wird auch das Ventilglied 12 für seine Rückkehr in die Schließstellung S gemäss Pfeil P1 (Fig. 1) freigegeben. Anschliessende Beendigung der Zugkraft an der Schlauchleitung 28 lässt das Betätigungsglied 26 zwar gegen die Unterseite des Steuerzapfens 46 wirken, jedoch ohne dessen Schließstellung zu beeinflussen.

Mit dem Schliessen des Ventilgliedes 12 gelangt ein Entlastungs-Ueberströmkanal 12a in Verbindung mit einem Auslasskanal 11d, so dass der Druckraum 23 gelüftet und der Verschlussring 24 entlastet. Damit ist die Anschlussvorrichtung für eine Verschiebung aus der Anschlußstellung freigegeben. Nach dem Abfahren der Anschlussvorrichtung schnappt das Betätigungsglied 26 mit dem Auslösehebel 54 unter der Wirkung der Federn 25b und 52 wieder nach oben in seine Wirkstellung für einen neuen Oeffnungs- und Arretiervorgang.

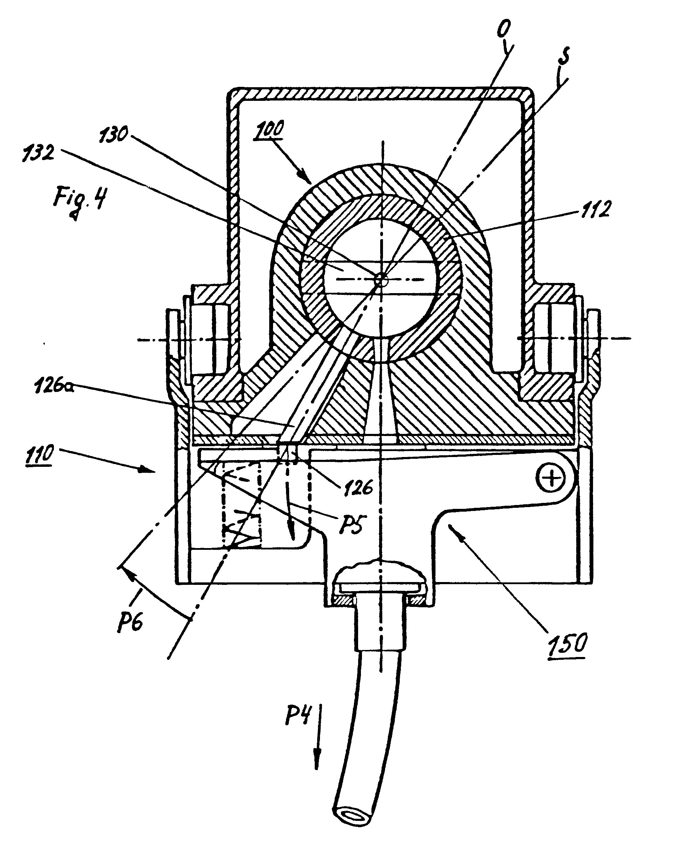

Die Ausführung nach Fig. 4 unterscheidet sich von der vorangehenden durch ein drehbar ausgebildetes Ventilglied 112 innerhalb eines Zapfventils 100. Ein als Radialzapfen ausgebildetes und unmittelbar mit dem Ventilglied verbundenes Schwenk-Betätigungsglied 126a bildet zusammen mit einem gemäss Pfeil P5 vertikal beweglich gelagerten Dauermagnetkörper 126 eine in einem Magnetfluss gekoppelte Magnetkörperpaarung, die das Betätigungsglied 126a beim Einfahren der Anschlussvorrichtung in die Anschlußstellung gegen die Wirkung einer Torsions-Rückstellfeder 130 aus der Schließstellung S in die Offenstellung O überführt. Diese Rückstellfeder ist dazu durch einen Querträger 132 mit dem Ventilglied 112 sowie in nicht dargestellter Weise drehfest mit dem Gehäuse des Zapfventils 100 verbunden. Mittels einer Schwenkhebel-Auslösevorrichtung 150, die im wesentlichen entsprechend der vorangehenden Ausführung ausgebildet ist, bewirkt bei Zug an der Schlauchleitung gemäss Pfeil P4 eine - hier jedoch wesentlich stärkere - Absenkung des die Ventilöffnung bewirkenden Dauermagnetkörpers 126. Dadurch wird die magnetische Koppelung so stark geschwächt, dass das Schwenk-Betätigungsglied 126a mit dem Ventilglied in seine Schließstellung zurückkehrt. Eine Zugentlastung der Schlauchleitung ohne Entfernen der Anschlussvorrichtung 110 aus der Anschlußstellung führt hier jedoch im Gegensatz zu der vorangehend beschriebenen Ausführung zu einer erneuten Ventilöffnung.

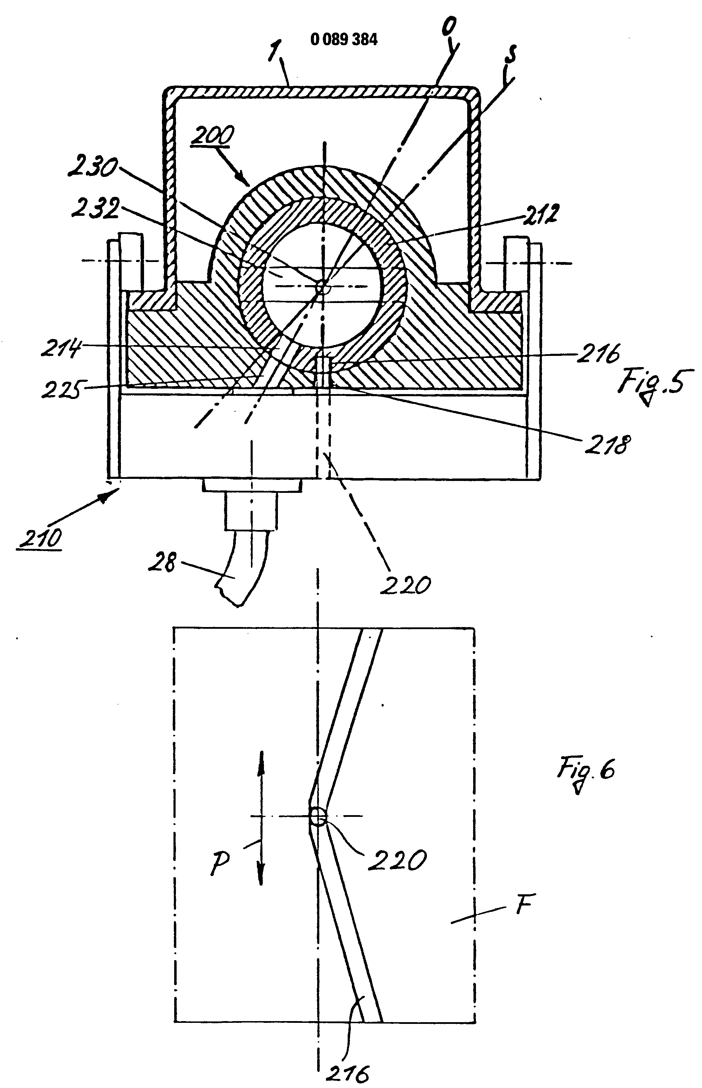

Bei der in Fig. 5 und 6 gezeigten Ausführung ist ein Zapfventil 200 mit rohrförmigem Drehventilglied 212 wie bei der vorangehend erläuterten Ausführungsform vorgesehen. In der in Fig. 5 angedeuteten Offenstellung O fluchtet ein radialer Steuerkanal 214 des Drehventilgliedes 212 mit einem Abströmkanal 225 und tritt darüber mit der Zapf-Schlauchleitung 28 einer wie bisher verfahrbaren Anschlussvorrichtung 210 in Verbindung. Eine wie bei der Ausführung nach Fig. 4 vorgesehene Torsionsfeder 230, die durch eine Traverse 232 mit dem Drehventilglied 212 und durch ein nicht dargestelltes Widerlagerglied mit dem Gehäuse des Zapfventils 200 verbunden ist, setzt das Drehventilglied 212 unter Vorspannung in Richtung einer Rückstellbewegung aus der Offenstellung O in die Schließstellung S. Im übrigen wird die Offnungs- und Schliess-Schwenkbewegung des Drehventilgliedes durch die Bewegung eines Steuerstiftes 220 innerhalb der Anschlussvorrichtung 210 bei der Bewegung der Anschlussvorrichtung in Längsrichtung der Zuführleitung 1 in Verbindung mit einer Steuernut 216 innerhalb der äusseren Umfangsfläche des Drehventilgliedes 212 bestimmt. Der Steuersitft 220 durchgreift einen parallel zur Längsrichtung der Zuführleitung 1 in die Unterseite des Gehäuses des Zapfventils 200 eingearbeiteten Längsschlitz 218 und wird somit unabhängig von der Bewegungslagerung der Anschlussvorrichtung 212 genau in Axialrichtung des Drehventilgliedes 212 geführt. In Radialrichtung einwärts bezüglich des Drehventilgliedes 212 greift der obere Endabschnitt des Steuerstiftes 220 in die Steuernut 216 ein, woraus sich bei der Längsbewegung der Anschlussvorrichtung 210 und damit des Steuerstiftes 220 bezüglich des Zapfventils 200 und damit der Steuernut 216 die erforderliche Schwenkbewegung zwischen Schließstellung und Offenstellung sowie in umgekehrter Richtung beim Anfahren und Verlassen der Anschlussstellung ergibt. In Fig. 6 ist der entsprechende Schrägverlauf der Steuernut 216 in einer Abwicklung der zylindrischen, Äusseren Umfangsfläche des Drehventilgliedes 212 dargestellt.

Ergänzend ist zu den verschiedenen Ausführungsmöglichkeiten der Auslösevorrichtungen für die Rückstellung des Ventilgliedes in seine Schließstellung folgendes anzumerken:

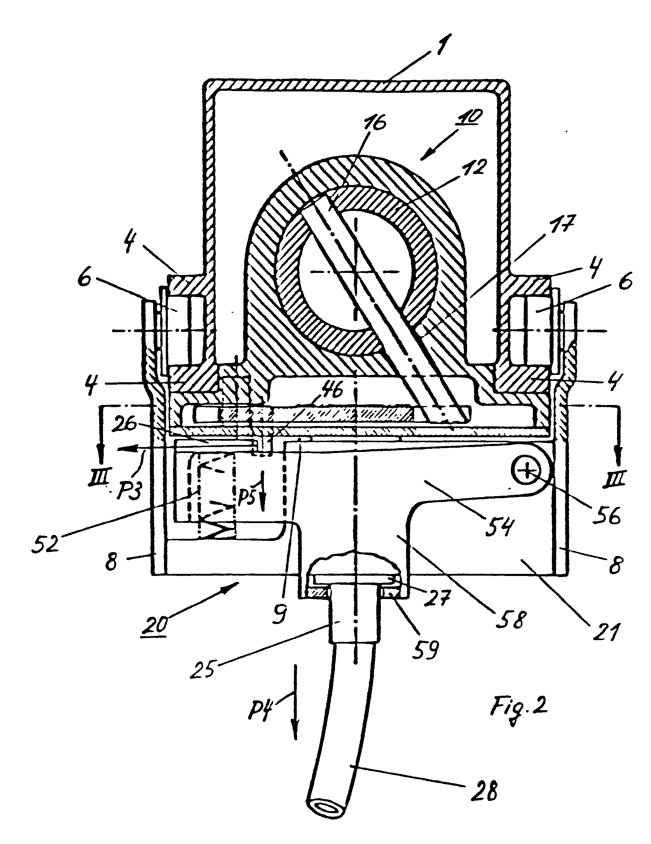

Bei der Ausführung nach Fig. 1 bis 3 kehrt das Schubventilglied 12, wie erläutert, nach Aufbringen einer entsprechenden Zugkraft gemäss Pfeil p4 an der Schlauchleitung 28 in die Schließstellung zurück, wobei ein anschliessendes Loslassen der Schlauchleitung ohne Verfahren der Anschlussvorrichtung kein erneutes Oeffnen des Zapfventils zur Folge hat. Wenn eine solche Funktion nicht erwünscht ist, so kann innerhalb der Erfindungsgedanken ohne weiteres dafür gesorgt werden, dass das Ventilglied unter Aufrechterhaltung der Anschlußstellung reversibel in die Schließstellung überführt wird. Dazu braucht beispielsweise bei der Ausführung nach Fig. 2-abgesehen von ohne weiteres plausiblen konstruktiven Anpassungen - nur die Schwenkachse 56 so weit nach unten sowie gegebenenfalls in Richtung zur Mittelachse der Anschlussvorrichtung 20 verlegt zu werden, so dass anstelle der Absenkbewegung des doppelkeilförmigen Betätigungsgliedes 26 in Richtung Pfeil P5, womit die erläuterte, irreversible Freigabe des Steuerzapfens 46 verbunden ist, unmittelbar eine Freigabebewegung des Betätigungsgliedes 26, mehr oder weniger parallel zur Bewegungsrichtung dieses Steuerzapfens gemäss Pfeil P3 tritt. Die Entlastungsfeder 52 ist dazu selbstverständlich in entsprechende Tangentialrichtung bezüglich der geänderten Drehachsenlage zu bringen, so dass sich wiederum die gewünschte Entlastungswirkung und Rückstellkraft gegen die Zugkraftbeaufachlagung der Schlauchleitung 28 ergibt. Diese in Oeffnungsrichtung des Ventils wirkende Entlastungs-Federkraft kann ohne weiteres so stark bemessen werden, dass sie die in Schliessrichtung des Ventils unmittelbar auf das Ventilglied 12 wirkende Kraft der Druckfeder 13 überwindet. Dies hat dann zur Folge, dass sich nach Entlasten der Schlauchleitung 28 von der Auslöse-Zugkraft gemäss pfeil P4 sogleich ein erneutes Oeffnen des Zapfventils mit selbsttätiger äusserer Abdichtung der Zapfverbindung ergibt.

Im übrigen kann auch der längsverschiebbare Anschluss der Schlauchleitung 28 innerhalb der Anschlussvorrichtung 20 mit einfachen konstruktiven Mitteln bezüglich des Fluiddruckes im Abströmkanal und in der Zapfleitung selbst entlastet werden. Hierzu braucht beispielsweise bei der Ausführung nach Fig. 1 in, wesentlichen nur die Hülse 25 unter entsprechender oberer und unterer Abdichtung mit Radialkanälen versehen zu werden, die mit entsprechenden radialen Ueberströmkanälen vom Druckraum 23 selbst in Verbindung stehen. Das obere Ende der Hülse 25 ist dazu mit einem Verschluss zu versehen und in eine gegen den Druckraum 23 abgedichtete Sackbohrung einzuführen, so dass auf die obere Stirnfläche der Hülse 25 kein Druckfluid einwirken kann. Der entsprechende Sackbohrungsraum ist dazu mit einer Entlüftungsöffnung zu versehen. Mit einer solchen Konstruktion wird die Auslöse-Betätigungskraft unabhängig vom Fluiddruck und dessen Schwankungen.

**Patentansprüche**

1. Einrichtung zur Versorgung von ortsveränderlichen Verbrauchern mit einem Druckfluid, mit einer Versorgungs-Zuführleitung (1), die eine Mehrzahl von mit gegenseitigem Abstand über die Leitungslänge verteilt angeordneten Zapfstellen aufweist, und mit mindestens einer längs der Zuführleitung (1) beweglich gelagerten Anschlußvorrichtung (20) für eine zugehörige Zapfleitung (28), wobei die Zapfstellen mindestens ein durch Überführung der Anschlußvorrichtung (20) in eine Anschlußstellung aus einer Schließstellung in eine Oeffnungsstellung überführbares Zapfventil (10) aufweisen und wobei im Bereich der Anschlußverbindung zwischen Zapfventil (10) und dem Eingang der Zapfleitung (28) mit dem Oeffnen des Zapfventils selbsttätig wirksam werdende Dichtungsmittel für die äußere Abdichtung der Anschlußverbindung vorgesehen sind, gekennzeichnet durch folgende Merkmale:

a) es sind Zapfventile (10) vorgesehen, die in an sich bekannter Weise je mit wenigstens einem mindestens teilweise zylindrischen oder prismatischen und durch Druckbeaufschlagung an seinen beiden Stirnflächen bezüglich des Druckfluids in der Zuführleitung (1) wenigstens annähernd druckentlasteten Schubventilglied (12) versehen sind, das wenigstens annähernd parallel zur Längsrichtung der Zuführleitung (1) zwischen einer Offenstellung und einer Schließstellung verschiebbar gelagert ist;

b) das Schubventilglied (12) tritt bei der in Längsrichtung der Zuführleitung (1) verlaufenden Einstellbewegung der Anschlußvorrichtung (20) in eine Anschlußstellung selbsttätig in ventilöffnende Schub-Wirkverbindung mit einem Betätigungsglied (26) der betreffenden Anschlußvorrichtung (20).

2. Einrichtung zur Versorgung von ortsveränderlichen Verbrauchern mit einem Druckfluid, mit einer Versorgungs-Zuführleitung (1), die eine Mehrzahl von mit gegenseitigem Abstand über die Leitungslänge verteilt angeordneten Zapfstellen aufweist, und mit mindestens einer längs der Zuführleitung (1) beweglich gelagerten Anschlußvorrichtung (110, 210) für eine zugehörige Zapfleitung (28), wobei die Zapfstellen mindestens ein durch Überführung der Anschlußvorrichtung (110, 210) in eine Anschlußstellung aus einer Schließstellung in eine Öffnungsstellung überführbares Zapfventil (100, 200) aufweisen und wobei im Bereich der Anschlußverbindung zwischen Zapfventil (100, 200) und dem Eingang der Zapfleitung (28) mit dem Öffnen des Zapfventils selbsttätig wirksam werdende Dichtungsmittel für die äußere Abdichtung der Anschlußverbindung vorgesehen sind, gekennzeichnet durch folgende Merkmale:

a) es sind Zapfventile (100, 200) vorgesehen, die in an sich bekannter Weise je mit wenigstens einem mindestens teilweise zylindrischen und durch Druckbeaufschlagung an seinen beiden Stirnflächen bezüglich des Druckfluids in der Zuführleitung (1) wenigstens annähernd druckentlasteten Drehventilglied (112) versehen sind, das mit seiner Zylinderachse wenigstens annähernd parallel zur Längsrichtung der Zuführleitung (1) angeordnet und zwischen einer Offenstellung und einer Schließstellung verdrehbar gelagert ist;

b) das Drehventilglied (112) tritt bei der in Längsrichtung der Zuführleitung (1) verlaufenden Einstellbewegung der Anschlußvorrichtung (110, 210) in eine Anschlußstellung selbsttätig in ventilöffnende Dreh-Wirkverbindung mit einem Schwenk-Betätigungsglied (126) der betreffenden Anschlußvorrichtung (110, 210).

3. Versorgungseinrichtung nach einem der vorangehenden Ansprüche, dadurch gekennzeichnet, daß das Schub- bzw. Drehventilglied (12 bzw. 112) rohrförmig mit mindestens einem im wesentlichen radialen Ventil-Durchströmkanal (14 bzw. 114) ausgebildet ist und an beiden Stirnflächen sowie mit seinem Rohr-Innenraum mit dem zuführseitigen Druckfluid beaufschlagt ist.

4. Versorgungseinrichtung nach einem der vorangehenden Ansprüche, dadurch gekennzeichnet, daß die Zapfventile (10, 110) mit einer in Richtung zur Zapfventil-Schließstellung wirkenden Federvorspannung versehen sind.

5. Versorgungseinrichtung nach einem der vorangehenden Ansprüche, dadurch gekennzeichnet, daß im Bereich der Anschlußvorrichtung (20) und/oder des Zapfventils (10) ein mit dem Betätigungsglied (26) der Anschlußvorrichtung zusammenwirkendes Nockengetriebe (30) vorgesehen ist, welches mit dem Ventilglied (12) des jeweils von der Anschlußvorrichtung angefahrenen Zapfventils in ventilöffnende Wirkverbindung tritt.

6. Versorgungseinrichtung nach Anspruch 5, mit Schubventilkörper-Zapfventilen, dadurch gekennzeichnet, daß das Nockengetriebe (30) über ein Richtungsumlenkgetriebe (40) zur Umsetzung einer quer zur Bewegungsrichtung der Anschlußvorrichtung gerichteten Ventilbetätigungs-Auslösebewegung in eine parallel zur Bewegungsrichtung des Schubventilgliedes (12) gerichteten Ventilöffnungsbewegung mit dem Schubventilglied gekoppelt ist.

7. Versorgungseinrichtung nach einem der vorangehenden Ansprüche, insbesondere nach Anspruch 2, dadurch gekennzeichnet, daß die Anschlußvorrichtung (120) einerseits und die Zapfventilanordnung (110) andererseits mit einer als Ventilöffnungs-Betätigungsglied wirkenden Magnetkörperpaarung (126, 126a) versehen sind.

8. Versorgungseinrichtung nach Anspruch 2 oder nach diesem und mindestens einem der übrigen vorangehenden Ansprüche, dadurch gekennzeichnet, daß für den Bewegungsantrieb des Drehventilgliedes (212) mindestens eine sich in Längsrichtung der Drehachse dieses Ventilgliedes erstreckende Führungsbahn (216) mit mindestens einem gegen diese Axialrichtung geneigten Abschnitt sowie mindestens ein mit dieser Führungsbahn (216) bei der An- und Abfahrbewegung der Anschlußvorrichtung (210) in Wirkverbindung stehendes Steuerglied (220) für die Umsetzung der Längsbewegung der Anschlußvorrichtung (210) in eine ventilöffnende bzw. ventilschließende Drehbewegung des Ventilgliedes (212) vorgesehen ist.

9. Versorgungseinrichtung nach Anspruch 8, dadurch gekennzeichnet, daß die Führungsbahn (216) als in der äußeren Umfangsfläche des Drehventilgliedes (212) eingeformte Steuernut und das Steuerglied (220) als in diese Nut eingreifender, mit der Anschlußvorrichtung (210) verbundener Steuerstift ausgebildet ist.

## Claims

1. Device for supplying portable consuming units with a pressure fluid, having a supply feed line (1) which has a plurality of tap locations arranged at a mutual distance in distributed manner over the line length, and having at least one connecting device (20) for an associated tap line (28), which connecting device (20) is movably mounted along the feed line (1), with the tap locations having at least one tap valve (10) which can be conveyed from a closed position into an opening position by conveying the connecting device (20) into a con-necting position, and with sealing means for the outer sealing of the connecting coupling, which sealing means automatically become active with the opening of the tap valve, being provided in the area of the connecting coupling between the tap valve (10) and the inlet of the tap line (28), characterized by the following features:

a) Tap valves (10) are provided which in a way known per se are in each case provided with at least one at least partially cylindrical or prismatic slide valve member (12) which is at least approximately pressure-relieved with respect to the pressure fluid in the feed line (1) by the acting of pressure on its two end faces and which is displaceably mounted between an open position and a closed position at least approximately parallel to the longitudinal direction of the feed line (1);

b) The slide valve member (12), during the adjusting motion of the connecting device (20) into a connecting position, which adjusting motion runs in the longitudinal direction of the feed line (1), enters automatically into a valve-opening slide-active connection with an actuating member (26) of the relevant connecting device (20).

2. Device for supplying portable consuming units with a pressure fluid, having a supply feed line (1) which has a plurality of tap locations arranged at a mutual distancein distributed manner over the line length, and having at least one connecting device (110, 210) for an associated tap line (28), which connecting device (110, 210) is movably mounted along the feed line (1), with the tap locations having at least one tap valve (100, 200) which can be conveyed from a closed position into an opening position by conveying the connecting device (110, 210) into a connecting position, and with sealing means for the outer sealing of the connecting coupling, which sealing means automatically become active with the opening of the tap valve, being provided in the area of the connecting coupling between the tap valve (100, 200) and the inlet of the tap line (28), characterized by the following features.

a) Tap valves (100, 200) are provided which in a way known per se are in each case provided with at least one at least partially cylindrical rotary valve member (112) which is at least approximately pressure relieved with respect to the pressure fluid in the feed line (1) by the acting of pressure on its two end faces and which is arranged with its cylinder axis at least approximately parallel to the longitudinal direction of the feed line (1) and is rotatably mounted between an open position and a closed position;

b) The rotary valve member (112), during the adjusting motion of the connecting device (110, 210) into a connecting position, which adjusting motion runs in the longitudinal direction of the feed line (1), enters automatically into a valve-opening, rotary-active connection with a swivel actuating member (126) of the relevant connecting device (110, 210).

3. Supply device according to one of the preceding Claims, characterized in that the slide or rotary valve member (12 or 112) is of tubular design with at least one essentially radial valve port (14 or 114) and, at both end faces and also with its tubular inner space, is acted upon by the pressure fluid on the feed side.

4. Supply device according to one of the preceding Claims, characterized in that the tap valves (10, 110) are provided with spring pretension acting in the direction of the tap valve closed position.

5. Supply device according to one of the preceding Claims, characterized in that a cam drive (30) which interacts with the actuating member (26) of the connecting device (20) is provided in the area of the connecting device and/or the tap valve (10), which cam drive (30) enters into a valve-opening active connection with the valve member (12) of the tap valve approached in each case by the connecting device.

6. Supply device according to Claim 5, with slidevalve-body tap valves, characterized in that the cam drive (30) is coupled to the slide valve member via a direction shift drive (40) for converting a valve actuating release motion, directed transversely to the motion direction of the connecting device, into a valve opening motion directed parallel to the motion direction of the slide valve member (12).

7. Supply device according to one of the preceding Claims, in particular according to Claim 2, characterized in that the connecting device (120) on the one hand and the tap valve arrangement (110) on the other hand are provided with a magnetic body combination (126, 126a) acting as a valve actuating member.

8. Supply device according to Claim 2 or according to Claim 2 and at least one of the remaining preceding Claims, characterized in that, for the motion drive of the rotary valve member (212), at least one guideway (216) is provided which extends in the longitudinal direction of the rotary axis of this valve member and has at least one portion inclined in this axial direction, and also at least one control member (220) is provided for converting the longitudinal motion of the connecting device (210) into a valve-opening or valve-closing rotary movement of the valve member (212), which control member (220) is in active connection with this guideway (216) during the approach and departure motion of the connecting device (210).

9. Supply device according to Claim 8, characterized in that the guideway (216) is made as a control groove formed in the outer peripheral surface of the rotary valve member (212), and the control member (220) is made as a control pin engaging into this groove and connected to the connecting device (210).

**Revendications**

1. Dispositif pour alimenter des appareils d'utilisation transportables avec un fluide sous pression-comprenant une canalisation d'alimentation (1) qui comporte une pluralité de points de distribution répartis à des intervalles réciproques sur la longueur de la canalisation, et comprenant au moins un dispositif de raccordement (20), monté de manière à être déplaçable le long de la canalisation d'alimentation (1), pour une canalisation associée de distribution (28), et dans lequel les points de distribution comportent au moins une soupape de distribution (10) pouvant être amenée depuis une position fermée dans une position ouverte par suite de la venue du dispositif de raccordement (20) dans une position de raccordement, et dans lequel il est prévu, dans la zone de la liaison de raccordement entre la soupape de distribution (10) et l'entrée de la canalisation de distribution (28), des moyens d'étanchéité qui deviennent automatiquement actifs lors de l'ouverture de la soupape et qui servent à réaliser l'étanchéification extérieure de la liaison de raccordement, caractérisé par les caractéristiques suivantes:

a) il est prévu des soupapes de distribution (10) qui sont équipées chacune, de façon connue en soi, d'au moins un poussoir de soupape (12) partiellement cylindrique ou prismatique et au moins approximativement déchargé de l'application de la pression produite par le fluide sous pression situé dans la canalisation d'alimentation (1), par suite de l'application d'une pression au niveau de ses deux faces frontales, et qui est monté de manière à être déplaçable au moins approximativement parallèlement à la direction longitudinale de la canalisation d'alimentation (1), entre une position ouverte et une position fermée;

b) lors du mouvement de réglage, qui s'effectue suivant la direction longitudinale de la canalisation d'alimentation (1), du dispositif de raccordement (20) dans une position de raccordement, le poussoir de soupape (12) est automatiquement relié, selon une liaison active de poussée ouvrant la soupape, à un organe d'actionnement (26) du dispositif de raccordement (20) considéré.

2. Dispositif pour alimenter des appareils d'utilisation transportables avec un fluide sous pression, comprenant une canalisation d'alimentation (1) qui comporte une multiplicité de points de distribution répartis à des intervalles réciproques sur la longueur de la canalisation, et comprenant au moins un dispositif de raccordement (110, 210) monté de manière à être déplaçable le long de la canalisation d'alimentation (1), pour une canalisation associée de distribution (28), et dans lequel les points de distribution comportent au moins une soupape de distribution (100, 200) pouvant être amenée depuis une position fermée dans une position ouverte lors de la venue du dispositif de raccordement (110, 210) dans une position de raccordement et dans lequel il est prévu, dans la zone de la liaison de raccordement entre la soupape de distribution (100, 200) et l'entrée de la canalisation de distribution (28) des moyens d'étanchéité qui deviennent automatiquement actifs lors de l'ouverture de la soupape de distribution, pour réaliser l'étanchéification extérieure de la liaison de raccordement, caractérisé par les caractéristiques suivantes:

a) il est prévu des soupapes de distribution (100, 200) qui sont équipées chacune, de façon connue en soi, d'au moins un organe rotatif de soupape (112) partiellement cylindrique et au moins approximativement déchargé de l'application de la pression produite par le fluide sous pression situé dans la canalisation d'alimentation (1), par suite de l'application d'une pression au niveau de ses deux faces frontales, et qui est monté au moins approximativement parallèlement à la direction longitudinale de la canalisation (1) et de façon à pouvoir tourner entre une position ouverte et une position fermée;

b) lors du déplacement de réglage, qui s'effectue suivant la direction longitudinale de la canalisation d'alimentation (1), du dispositif de raccordement (110, 210) dans une position de raccordement, l'organe rotatif de soupape (112) est relié de façon automatique, selon une liaison active en rotation ouvrant la soupape, à un organe d'actionnement pivotant (126) du dispositif de raccordement considéré (110, 210).

3. Dispositif d'alimentation selon l'une des revendications précédentes, caractérisé en ce que le poussoir ou l'organe rotatif de soupape (12 ou 112) est réalisé sous la forme d'un tube comportant au moins un canal essentiellement radial (14 ou 114) de traversée de la soupape et est chargé par le fluide sous pression situé du côté arrivée, sur les deux faces frontales ainsi que dans son espace intérieur tubulaire.

4. Dispositif d'alimentation selon l'une des revendications précédentes, caractérisé en ce que les soupapes de distribution (10,110) sont munies d'un dispositif de précontrainte à ressort agissant dans le sens de la fermeture de la soupape de distribution.

5. Dispositif d'alimentation selon l'une des revendications précédentes, caractérisé en ce que, dans la zone du dispositif de raccordement (20) et/ou de la soupape de distribution (10), il est prévu un mécanisme à came (30) qui est relié, selon une liaison active ouvrant la soupape, à l'organe (12) de la soupape de distribution dont s'est rapproché le dispositif de raccordement.

6. Dispositif d'alimentation selon la revendication 5, comportant des soupapes de distribution à poussoir, caractérisé en ce que le mécanisme à came (30) est accouplé au poussoir de soupape par l'intermédiaire d'un mécanisme (40) de renvoi du sens de déplacement, servant à transformer un déplacement de déclenchement d'actionnement de la soupape, dirigé transversalement par rapport à la direction de déplacement du dispositif de raccordement, en un déplacement d'ouverture de la soupape, dirigé parallèlement à la direction de déplacement du poussoir de soupape (12).

7. Dispositif d'alimentation selon l'une des revendications précédentes, notamment la revendication 2, caractérisé en ce que le dispositif de raccordement (120) d'une part et le dispositif (110) formant soupape de distribution d'autre part sont munis d'un couple (126, 126a) de corps en forme d'aimants agissant en tant qu'organe d'actionnement pour l'ouverture de la soupape.

8. Dispositif d'alimentation selon la revendication 2, ou selon cette revendication et au moins l'une des autres revendications précédentes, caractérisé en ce que, pour l'entraînement de l'organe rotatif de soupape (212) il est prévu au moins une voie de guidage (216) s'étendant suivant la direction longitudinale de l'axe de rotation de cet organe de soupape et comprenant au moins une section inclinée par rapport à cette direction axiale, ainsi qu'au moins un organe de commande (220) relié selon une liaison active à cette voie de guidage (216) lors du déplacement d'arrivée et de départ du dispositif de raccordement (210) pour transformer le déplacement longitudinal du dispositif de raccordement (210) en un mouvement de rotation, ouvrant ou fermant la soupape, de l'organe de soupape (212).

9. Dispositif d'alimentation selon la revendication 8, caractérisé en ce que la voie de guidage (216) est réalisée sous la forme d'une rainure de commande réalisée par usinage dans la surface périphérique extérieure de O l'organe rotatif de soupape (212) et que l'organe de commande (220) est réalisé sous la forme d'une tige de commande s'engageant dans cette rainure et reliée au dispositif de raccordement (210).

Fig.1

0 089 384

Fig. 2

Fig.3

Fig.4

**0 089 384**

Fig.5

Fig.6